# EUROPÄISCHE PATENTANMELDUNG

(11) **EP 4 104 921 A1**
(43) Veröffentlichungstag der Anmeldung: **21.12.2022**
(21) Anmeldenummer: 21020315.4
(22) Anmeldetag: 15.06.2021
(51) Int. Cl.: B01J 8/06

(54) **REAKTOR ZUR DAMPFREFORMIERUNG VON KOHLENWASSERSTOFFEN UND VERFAHREN ZUR DAMPFREFORMIERUNG**

(71) Anmelder: Linde GmbH, 82049 Pullach (DE)
(72) Erfinder: Sasa, Klarin, Raubling (DE)
(74) Vertreter: Fischer, Werner

(57) **Zusammenfassung**

Es wird ein Reaktor (100) zur Dampfreformierung von Kohlenwasserstoffen vorgeschlagen. Dieser ist mit einem Rohrsystem (R, V, Z), das eine Vielzahl von Reaktionsrohren (R) aufweist, die durch eine mittels Brennern (B) beheizbare Strahlungszone (S) geführt und mit einem Katalysatormaterial gefüllt sind, ausgestattet, wobei die Reaktionsrohre (R) jeweils zumindest in einem Abschnitt zwischen einem oberen Ende und einem unteren Ende vertikal durch die Strahlungszone verlaufen und an ihrem oberen Ende mit Aufhängmitteln (O, P, U) an einer Tragestruktur (T) aufgehängt sind, die in oder oberhalb der Strahlungszone (S) angeordnet ist. Es ist vorgesehen, dass die Aufhängmittel (O, P, U) jeweils einen Pneumatikzylinder (P) aufweisen. Eine entsprechende Anlage ist ebenfalls Gegenstand der vorliegenden Erfindung.

## Beschreibung

Die Erfindung betrifft einen Reaktor zur Dampfreformierung von Kohlenwasserstoffen und ein Verfahren zur Dampfreformierung gemäß den jeweiligen Oberbegriffen der unabhängigen Patentansprüche.

### Hintergrund der Erfindung

Die Dampfreformierung ist seit langem bekannt und beispielsweise im Artikel "Gas Production, 2. Processes" in Ullmann's Encyclopedia of Industrial Chemistry, Onlineausgabe 15. Oktober 2011, doi: 10.1002/14356007.o12_o01, beschrieben.

Bei der Dampfreformierung wird ein kohlenwasserstoff- und dampfhaltiges Einsatzgemisch parallel durch eine Vielzahl von typischerweise vertikal verlaufenden Reaktionsrohren geführt, die in einem Reaktorbehälter angeordnet sind, und in dem Reaktorbehälter mittels Brennern beheizt. In den Reaktionsrohren ist ein für die Dampfreformierung geeigneter Katalysator auf einem entsprechenden Trägermaterial bereitgestellt. Das Einsatzgemisch wird über Verteiler(rohre) auf die Reaktionsrohre verteilt und ein durch die Dampfreformierung erhaltenes Produktgemisch wird über Sammler(rohre) zusammengefasst und abgeleitet. Die Reaktionsrohre, ein oder mehrere Verteilerrohre und ein oder mehrere Sammlerrohre werden nachfolgend zusammenfassend auch als Rohrsystem bezeichnet.

Die Reaktionsrohre, aber auch die Verteiler und Sammler eines entsprechenden Rohrsystems dehnen sich durch den Wärmeeintrag durch die Brenner beträchtlich aus. Daher wird das obere Ende des Rohrsystems typischerweise flexibel am Reaktordach oder einer Tragstruktur aufgehängt.

Zur Aufhängung entsprechender Rohrsysteme ist insbesondere die Verwendung von Gegengewichten und sogenannter Konstanthänger bekannt.

In ersterem Fall werden Stahlseile am oberen Ende bzw. in einem oberen Bereich der Reaktionsrohre befestigt. Die Stahlseile werden mittels Umlenkrollen zu Gegengewichten geführt. Die Gegengewichte befinden sich meist am Rand der Strahlungszone in dem Reaktorbehälter. Durch Schwerkraft ziehen diese Gegengewichte nach unten und entlasten somit das Rohrsystem. Die Gegengewichte bestehen aus Metall oder Beton. Nachteil dieser Variante ist, dass etwa das gleiche Gewicht des Rohrsystems zusätzlich getragen werden muss und daher der Stahlbau und die Fundamente massiver ausgeführt werden müssen.

Bei der Verwendung von Konstanthängern werden diese aus Platzbedarfsgründen in einer zusätzlichen Bühne oberhalb der Reaktionsrohre untergebracht. Dort stützen sie sich auf dem Stahlbau ab und entlasten somit das Rohrsystem. Nachteil dieser Variante ist, dass die erwähnte zusätzliche Bühne notwendig ist, so dass die gesamte Konstruktion höher baut. Auch in diesem Fall müssen der Stahlbau und die Fundamente massiver ausgeführt werden.

Die vorliegende Erfindung stellt sich daher die Aufgabe, die Aufhängung eines Rohrsystems eines Reaktors zur Dampfreformierung vorteilhaft zu gestalten.

### Offenbarung der Erfindung

Vor diesem Hintergrund schlägt die Erfindung einen Reaktor zur Dampfreformierung von Kohlenwasserstoffen und ein Verfahren zur Dampfreformierung mit den Merkmalen der unabhängigen Patentansprüche vor. Die abhängigen Patentansprüche sowie die nachfolgende Beschreibung betreffen vorteilhafte Ausgestaltungen.

Der erfindungsgemäß vorgeschlagene Reaktor zur Dampfreformierung von Kohlenwasserstoffen ist mit einem Rohrsystem ausgestattet, das eine Vielzahl von Reaktionsrohren aufweist, die durch eine mittels Brennern beheizbare Strahlungszone geführt und mit einem Katalysatormaterial gefüllt sind, wobei die Reaktionsrohre jeweils zumindest in einem Abschnitt zwischen einem oberen Ende und einem unteren Ende vertikal durch die Strahlungszone verlaufen und an ihrem oberen Ende mit Aufhängmitteln an einer Tragestruktur aufgehängt sind, die in oder oberhalb der Strahlungszone angeordnet ist. Die Erfindung betrifft damit die Dampfreformierung, wie sie grundsätzlich bekannt ist und zuvor erläutert wurde.

Erfindungsgemäß ist nun, im Gegensatz zur Verwendung von Gegengewichten und Konstanthängern, wie sie zuvor erläutert wurden, vorgesehen, dass die Aufhängmittel jeweils einen Pneumatikzylinder aufweisen.

Wie erwähnt, dehnen sich die Rohre eines entsprechenden Rohrsystems, darunter insbesondere die Reaktionsrohre, in bekannten Reaktoren zur Dampfreformierung aufgrund des Wärmeeintrags durch die Brenner beträchtlich; in typischen Anordnungen beispielsweise um ca. 240 mm. Die kritischen Bereiche des Rohrsystems befinden sich dabei zwischen dem Reaktionsrohr und dem darunterliegenden heißen bzw. kalten Sammler. Ziel ist es, trotz der Wärmedehnung des Katalysatorrohres eine konstante Kraft zur Entlastung des kritischen Bereiches des Systems zu erlangen (horizontale Kennlinie im Kraft-Weg-Diagramm). Diese Aufgabe löst die vorliegende Erfindung, ohne die eingangs erläuterten Nachteile des Standes der Technik - massivere Fundamente, höhere Bauform - in Kauf zu nehmen.

Mit anderen Worten als zuvor und nachfolgen ausgedrückt, werden erfindungsgemäß Pneumatikzylinder oberhalb der Reaktionsrohre befestigt und beispielsweise mit Zugstangen am darüber liegenden Stahlbau angebracht. Die Pneumatikzylinder benötigen keine zusätzliche Bühne, da sie unter dem bestehenden Reformerstahlbau abgehängt werden. Es werden keine zusätzlichen Lasten eingebracht.

In einem erfindungsgemäß ausgestalteten Reaktor können die Pneumatikzylinder jeweils einen Verfahrweg von 10 bis 50 cm, insbesondere von 20 bis 30 cm, aufweisen. Hierdurch sind diese in der Lage, die Wärmedehnung der Katalysatorrohre in dem zuvor erwähnten Bereich zu kompensieren und eine konstante Hebekraft auf diese auszuüben, um diese zu entlasten.

In einem erfindungsgemäß ausgestalteten Reaktor können die Pneumatikzylinder ferner jeweils unter Verwendung einer Druckluftleitung an eine Luftverteilerleitung angebunden sein.

Die Aufhängmittel können im Rahmen der Erfindung jeweils eine obere Befestigungsstange, mittels derer der jeweilige Pneumatikzylinder an der Tragestruktur aufgehängt ist, und eine untere Befestigungsstange, mittels derer das jeweilige Reaktionsrohr an dem jeweiligen Pneumatikzylinder aufgehängt ist, umfassen.

In einem erfindungsgemäß ausgebildeten Reaktor kann die Tragestruktur als Teil einer Stahlbaustruktur ausgebildet sein, die eine obere Wand der Strahlungszone bildet. Mit anderen Worten ist, wie erwähnt, insbesondere keine gesonderte Bühne vorhanden.

Vorteilhafterweise ist in einem erfindungsgemäß ausgebildeten Reaktor zwischen der Tragestruktur einerseits und dem oberen Ende der Reaktionsrohre andererseits ein Abstand von nicht mehr als 300 cm vorhanden, der durch die Aufhängmittel überbrückt ist. Ein derartig geringer Abstand lässt sich durch Verwendung von Konstanthängern nicht erzielen. Durch die Erfindung reduziert sich also gegenüber der Verwendung von Konstanthängern die gesamte Bauhöhe. Gegenüber der Verwendung von Gegengewichten ergibt sich insbesondere der Vorteil der Gewichtsersparnis.

Der erfindungsgemäß ausgebildete Reaktor ist vorteilhafterweise zum Betrieb mit Druckluft in einem Druckbereich von 2 bis 10 bar eingerichtet. Der Betrieb der Pneumatikzylinder kann mittels dabei insbesondere mittels Anlagendruckluft auf einem typischen Druckniveau von ca. 6 bar erfolgen. Der Reaktor kann also insbesondere zum Betrieb mit Druckluft aus einem zentralen Druckluftsystem einer Anlage, deren Teil der Reaktor ist, eingerichtet sein.

Im Rahmen der vorliegenden Erfindung kann ein Druckluftspeicher mit Manometersteuerung oder -regelung bereitgestellt sein. Ein entsprechender Druckluftspeicher bzw. Druckluftbehälter kann insbesondere zu dem Zweck zusätzlich installiert sein, damit im Falle eines Stromausfalls die Pneumatikzylinder nicht sofort Ihre Wirkung verlieren.

Ein Verfahren zur Dampfreformierung von Kohlenwasserstoffen ist ebenfalls, wie erwähnt, Gegenstand der Erfindung. Bei diesem wird ein Reaktor mit einem Rohrsystem verwendet, das eine Vielzahl von Reaktionsrohren aufweist, die durch eine mittels Brennern beheizbare Strahlungszone geführt und mit einem Katalysatormaterial gefüllt sind, wobei die Reaktionsrohre jeweils zumindest in einem Abschnitt zwischen einem oberen Ende und einem unteren Ende vertikal durch die Strahlungszone verlaufen und an ihrem oberen Ende mit Aufhängmitteln an einer Tragestruktur aufgehängt sind, die in oder oberhalb der Strahlungszone angeordnet ist.

Erfindungsgemäß weisen die in dem erfindungsgemäß verwendeten Reaktor vorgesehenen Aufhängmittel jeweils einen Pneumatikzylinder auf.

Das erfindungsgemäß vorgeschlagene Verfahren sieht in Ausgestaltungen die Verwendung eines Reaktors vor, wie er zuvor in unterschiedlichen Ausführungsformen beschrieben wurde. Auf die obigen Erläuterungen bezüglich des erfindungsgemäßen Reaktors und seiner vorteilhaften Ausgestaltungen sei daher ausdrücklich verwiesen.

Die Erfindung wird nachfolgend unter Bezugnahme auf die beigefügten Zeichnungen weiter erläutert, welche eine Ausgestaltung der vorliegenden Erfindung gegenüber dem Stand der Technik veranschaulichen.

### Kurze Beschreibung der Zeichnungen

Figur 1 zeigt einen nicht erfindungsgemäßen Reaktor.
Figur 2 zeigt einen Reaktor gemäß einer Ausgestaltung der Erfindung.

In den Figuren sind einander baulich und/oder funktional entsprechende Komponenten sowie identische oder vergleichbare Stoffströme mit identischen Bezugszeichen angegeben und werden der Übersichtlichkeit halber nicht wiederholt erläutert. Erläuterungen bzgl. Verfahrensschritten beziehen sich auch auf entsprechende Vorrichtungen bzw. Komponenten von Anlagen und umgekehrt.

### Ausführliche Beschreibung der Zeichnungen

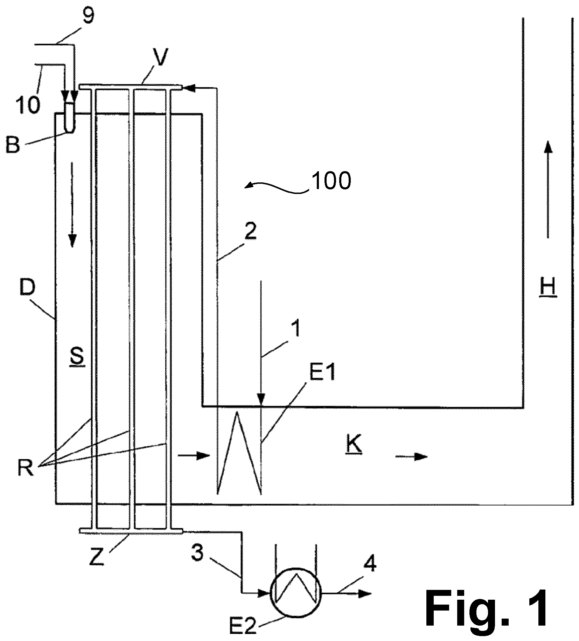

In Figur 1 ist ein Reaktor 100 zur Dampfreformierung zur Veranschaulichung des Hintergrunds der Erfindung stark vereinfacht veranschaulicht.

Der hier veranschaulichte Reaktor 100 kann insbesondere Teil einer Synthesegasanlage sein, in der aus einem kohlenwasserstoff- und wasserdampfhaltigen Einsatzgemisch, das beispielsweise Erdgas umfasst, ein Synthesegas an sich bekannter Art erzeugt wird.

Über eine Leitung 1 wird das Einsatzgemisch in einen Wärmetauscher E1, der in einer Konvektionszone K, die Teil eines Rauchgassystems ist, angeordnet ist, eingeleitet, und gegen heißes Rauchgas vorgewärmt. Das vorgewärmte Einsatzgemisch wird über eine Leitung 2 zu einem Verteiler V geführt und auf die mit einem geeigneten Katalysatormaterial gefüllten Reaktionsrohre R verteilt, in denen es in einer endothermen Reaktion in das Synthesegas umgesetzt wird. Das Synthesegas wird in einem Sammler Z gesammelt und über eine Leitung 3 einem Kühlersystem E2 zugeleitet. In dem Kühlersystem E2 wird das Synthesegas bis unterhalb des Wassertaupunkts abgekühlt, wobei eine Gasfraktion 4 und nicht gesondert veranschaulichtes Prozesskondensat erzeugt werden. Zu weiteren Details bezüglich der Behandlung der Gasfraktion 4 sei, wie bereits zuvor, auf einschlägige Fachliteratur verwiesen.

Die für die endotherme Dampfreformierungsreaktion benötigte Energie wird über Brenner B erzeugt, in denen Brennstoff 9 mit Luft 10 unter Sauerstoffüberschuss verbrannt wird. Das dabei erzeugte heiße Rauchgas, dessen Strömungsrichtung durch Pfeile angedeutet ist, gibt einen großen Teil seiner fühlbaren Wärme vorwiegend durch Strahlung in der Strahlungszone S an, die durch die Reaktionsrohre R strömenden Reaktionspartner ab. Mit einer Temperatur von immer noch deutlich über 1000 °C wird das abgekühlte Rauchgas aus der Strahlungszone S abgezogen und in die Konvektionszone K eingeleitet, in der es gegen anzuwärmende Verfahrensströme abgekühlt wird, bevor es über den Kamin H und entsprechende Reinigungseinrichtungen in die Atmosphäre gelangt.

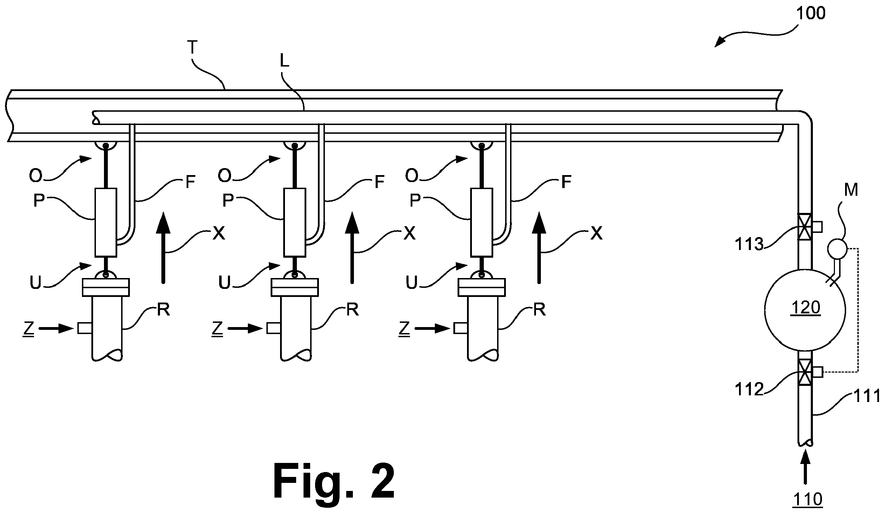

In Figur 2, in der für Elemente gleicher Funktion oder technischer Realisierung dieselben Bezugszeichen wie in Figur 1 verwendet werden, ist die Aufhängung eines Rohrsystems, das neben einem Reaktionsrohr K auch einen Verteiler V und einen Sammler Z aufweisen kann, die in Figur 2 nicht dargestellt sind, veranschaulicht. Dabei ist die Aufhängung von drei Reaktionsrohren R veranschaulicht. Eine beliebige Anzahl weiterer Reaktionsrohre R, Verteiler V und Sammler Z können in gleicher oder vergleichbarer Weise aufgehängt werden.

An einer Tragstruktur T sind dabei jeweils Pneumatikzylinder P zwischen oberen und unteren Befestigungsstrukturen, beispielsweise entsprechenden Ösen mit Zugstangen O, U oder Stahlseilen, eingebunden. Die Pneumatikzylinder P werden über Druckluftleitungen F aus einer Luftverteilerleitung L mit Druckluft versorgt. Es kann eine beliebige Anzahl von Luftverteilerleitungen vorgesehen sein. Durch eine hierdurch einstellbare Hebekraft kann eine durch Pfeile angedeutete Expansion X der Reaktionsrohre R im heißen Zustand kompensiert werden.

Die Versorgung mit Druckluft über die Luftverteilerleitung L kann den örtlichen Gegebenheiten angepasst sein; die nachfolgenden Erläuterungen betreffen nur ein Beispiel. In diesem wird aus einer zentralen Luftversorgung 110 Luft in eine Zuleitung 111 über ein Manometer M druckgeregeltes bzw. -gesteuertes Ventil 112 zu einem Druckbehälter 120 geführt. Die Luft kann hieraus über ein weiteres Ventil 113 der Luftverteilerleitung L zugeführt werden.

## Patentansprüche

1. Reaktor (100) zur Dampfreformierung von Kohlenwasserstoffen, mit einem Rohrsystem (R, V, Z), das eine Vielzahl von Reaktionsrohren (R) aufweist, die durch eine mittels Brennern (B) beheizbare Strahlungszone (S) geführt und mit einem Katalysatormaterial gefüllt sind, wobei die Reaktionsrohre (R) jeweils zumindest in einem Abschnitt zwischen einem oberen Ende und einem unteren Ende vertikal durch die Strahlungszone verlaufen und an ihrem oberen Ende mit Aufhängmitteln (O, P, U) an einer Tragestruktur (T) aufgehängt sind, die in oder oberhalb der Strahlungszone (S) angeordnet ist, **dadurch gekennzeichnet, dass** die Aufhängmittel (O, P, U) jeweils einen Pneumatikzylinder (P) aufweisen.

2. Reaktor (100) nach Anspruch 1, bei dem die Pneumatikzylinder (P) jeweils einen Verfahrweg von 10 bis 50 cm aufweisen.

3. Reaktor (100) nach Anspruch 1 oder nach Anspruch 2, bei dem die Pneumatikzylinder (P) jeweils unter Verwendung einer Druckluftleitung (F) an eine Luftverteilerleitung (L) angebunden sind.

4. Reaktor (100) nach einem der vorstehenden Ansprüche, bei dem die Aufhängmittel (O, P, U) jeweils eine obere Schubstange (O), mittels derer der jeweilige Pneumatikzylinder (P) an der Tragestruktur (T) aufgehängt ist, und eine untere Schubstange (U), mittels derer das jeweilige Reaktionsrohr (R) an dem jeweiligen Pneumatikzylinder (P) aufgehängt ist, umfassen.

5. Reaktor (100) nach einem der vorstehenden Ansprüche, bei dem die Tragestruktur (T) Teil einer Stahlbaustruktur oberhalb der Strahlungszone ist.

6. Reaktor (100) nach einem der vorstehenden Ansprüche, bei dem zwischen der Tragestruktur (T) einerseits und dem oberen Ende der Reaktionsrohre (R) andererseits ein Abstand von nicht mehr als 300 cm vorhanden ist, der durch die Aufhängmittel (O, P, U) überbrückt ist.

7. Reaktor (100) nach einem der vorstehenden Ansprüche, der zum Betrieb mit Druckluft in einem Druckbereich von 2 bis 10 bar eingerichtet ist.

8. Reaktor (100) nach einem der vorstehenden Ansprüche, der zum Betrieb mit Druckluft aus einem zentralen Druckluftsystem einer Anlage, deren Teil der Reaktor (100) ist, eingerichtet ist.

9. Reaktor (100) nach einem der vorstehenden Ansprüche, bei der ein Druckluftspeicher mit Manometersteuerung oder-regelung bereitgestellt ist.

10. Verfahren zur Dampfreformierung von Kohlenwasserstoffen, bei dem ein Reaktor (100) mit einem Rohrsystem (R, V, Z) verwendet wird, das eine Vielzahl von Reaktionsrohren (R) aufweist, die durch eine mittels Brennern (B) beheizbare Strahlungszone (S) geführt und mit einem Katalysatormaterial gefüllt sind, wobei die Reaktionsrohre (R) jeweils zumindest in einem Abschnitt zwischen einem oberen Ende und einem unteren Ende vertikal durch die Strahlungszone verlaufen und an ihrem oberen Ende mit Aufhängmitteln (O, P, U) an einer Tragestruktur (T) aufgehängt sind, die in oder oberhalb der Strahlungszone (S) angeordnet ist, **dadurch gekennzeichnet, dass** die Aufhängmittel (O, P, U) jeweils einen Pneumatikzylinder (P) aufweisen.

11. Verfahren nach Anspruch 10, bei dem ein Reaktor (100) nach einem der Ansprüche 1 bis 9 verwendet wird.
